# EUROPEAN PATENT APPLICATION

(11) **EP 4 822 214 A1**
(43) Date of publication of application: **14.10.2026**
(21) Application number: 26160942.4
(22) Date of filing: 26.02.2026
(51) Int. Cl.: F16H 1/16, F16H 1/28, F16H 37/04, F16H 57/039

(54) **POWER SLIDING DOOR DRIVE UNIT**

(30) Priority: 10.04.2025 US 202563786813 P
(71) Applicant: Strattec Power Access LLC, Auburn Hills, MI 48326 (US)
(72) Inventor: SPROULE, Gregory V., Linden, MI, 48451 (US); NGEM, Kimpon, Grant Township, MI, 48032 (US); FRITSCHLE, Jacob D., Rochester Hills, MI, 48307 (US); RAO, Srinivas J., Mono, Ontario, L9W 6G5 (CA)
(74) Representative: Prüfer & Partner mbB Patentanwälte · Rechtsanwälte

(57) **Abstract**

A drive unit includes a main housing, a motor coupled to the main housing, a worm coupled to the motor and configured to be rotated via the motor, a planetary gear set coupled to the worm and configured to be driven by the worm, and an output shaft configured to be driven by the planetary gear set. The main housing defines an interior cavity, wherein the drive unit includes main housing gear teeth along an interior surface of the main housing, wherein the main housing gear teeth project radially inwardly into the interior cavity of the main housing and define a ring gear of the planetary gear set.

## Description

### CROSS-REFERENCE TO RELATED APPLICATIONS

This application claims priority to U.S. Provisional Application No. 63/786,813, filed April 10, 2025, the entire contents of which are incorporated herein by reference.

### FIELD

This disclosure relates generally to drive units, including drive units for power sliding doors on motor vehicles.

### SUMMARY

In one aspect, the disclosure provides a drive unit having a main housing, a motor coupled to the main housing, a worm coupled to the motor and configured to be rotated via the motor, a planetary gear set coupled to the worm and configured to be driven by the worm, and an output shaft configured to be driven by the planetary gear set. The main housing defines an interior cavity, the drive unit includes main housing gear teeth along an interior surface of the main housing, and the main housing gear teeth project radially inwardly into the interior cavity of the main housing and define a ring gear of the planetary gear set.

Other aspects of the disclosure will become apparent by consideration of the detailed description and accompanying drawings.

### BRIEF DESCRIPTION OF THE DRAWINGS

FIG. 1 is a perspective view of a drive unit according to one example.
FIG. 2 is a cross-sectional view of the drive unit of FIG. 1, taken along lines 2-2 in FIG. 1.
FIG. 3 is a partial perspective view of the drive unit of FIG. 1, illustrating integrated gear teeth molded into a main housing of the drive unit to form a ring gear.
FIG. 4 is a cross-sectional view of the housing of the drive unit of FIG. 1, taken along lines 4-4 in FIG. 1.
FIG. 5 is a partial view of the drive unit of FIG. 1, illustrating the main housing.
FIG. 6 is a partial view of the drive unit of FIG. 1, illustrating a carrier coupled to the main housing.
FIG. 7 is a partial view of the drive unit of FIG. 1, illustrating a first spacer.
FIG. 8 is a partial view of the drive unit of FIG. 1, illustrating planetary gears coupled to the carrier.
FIG. 9 is a partial view of the drive unit of FIG. 1, illustrating a second spacer.
FIG. 10 is a partial view of the drive unit of FIG. 1, illustrating a main gear coupled to the main housing.
FIG. 11 is a front view of the main gear.
FIG. 12 is a top view of a bottom cover of the drive unit of FIG. 1.
FIG. 13 is a top view of the bottom cover of FIG. 12, further illustrating a sensor installed on the bottom cover.
FIGS. 14 and 15 are bottom views of the drive unit of FIG. 1, illustrating the bottom cover and the sensor being attached to the housing of the drive unit.

### DETAILED DESCRIPTION

Before any examples of the present disclosure are explained in detail, it is to be understood that the disclosure is not limited in its application to the details of construction and the arrangement of components set forth in the following description or illustrated in the following drawings. The disclosure is capable of other examples and of being practiced or of being carried out in various ways.

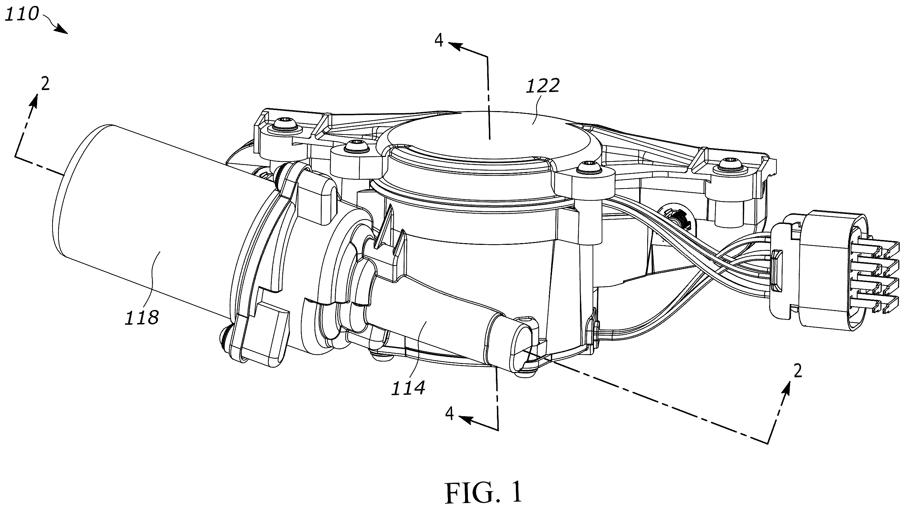

FIGS. 1-15 illustrate a drive unit 110 for use within a motor vehicle or other structure. The drive unit 110 may be used, for example, for powering a vehicle door (e.g., a power sliding door, a power swing door, or other door), or for powering any other vehicle component (e.g., lift gate, tail gate, etc.).

With reference to FIG. 1, in some examples the drive unit 110 includes a main housing 114 and a motor housing 118 coupled (e.g., fixed directly with one or more fasteners) to the main housing 114. In other examples the motor housing 118 may be spaced from the main housing 114, or may be integrally formed in a single monolithic piece with the main housing 114.

As illustrated in FIG. 1, in some examples the drive unit 110 may further include an additional (e.g., cover) housing 122 coupled (e.g., fixed with one or more fasteners) to the main housing 114, to cover at least a portion of the main housing 114. Other examples may not include the additional housing 122, or the additional housing 122 may for example be integrally formed in a single monolithic piece with the main housing 114. Other examples of the drive unit 110 may include other numbers and/or arrangements of housings than that illustrated in FIG. 1.

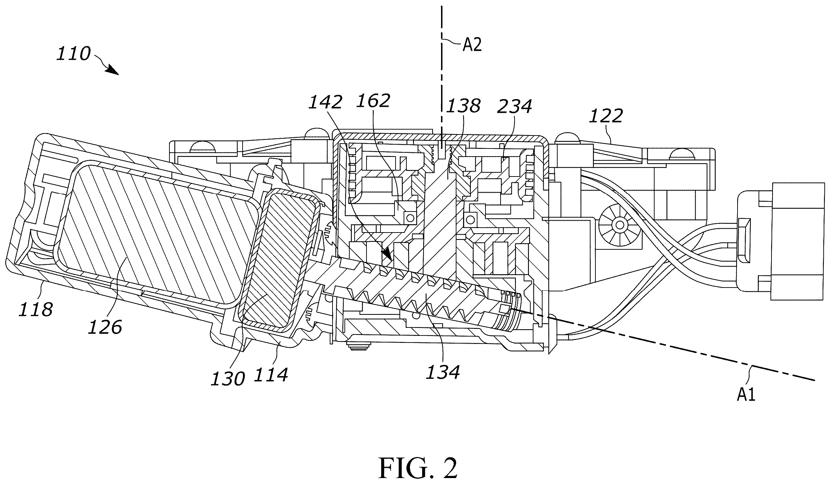

With reference to FIG. 2, the drive unit 110 includes a motor 126 (e.g., an electric motor or other type of motor or actuating device) that is positioned at least partially (e.g., entirely) within the motor housing 118, and generates an output torque or other force. The motor 126 may include one, or be coupled to, a clutch 130 or other structure (e.g., input structure) that facilitates control over the output torque or other force generated by the motor 126. In some examples, the motor 126 may not include the clutch 130.

With continued reference to FIG. 2, the drive unit 110 includes a worm 134 that is coupled to the motor 126 and rotates about a first longitudinal axis A1 via the motor 126. As illustrated in FIGS. 1 and 2, the worm 134 may be positioned at least partially (e.g., entirely) within the main housing 114. In other examples the drive unit 110 does not include the worm 134, and instead includes a different gear or structure coupled to and driven by the motor 126.

With continued reference to FIG. 2, the drive unit 110 includes an output shaft 138 (or other output structure), and may include for example a planetary gear set 142 (or other type of gear set) that is positioned between the worm 134 (or other gear or structure) and the output shaft 138 to transfer power from the motor 126 to the output shaft 138. The output shaft 138 may be positioned at least partially (e.g., entirely) within the main housing 114, and may be aligned along (and rotate about) a second longitudinal axis A2.

As illustrated in FIG. 2, the first longitudinal axis A1 is orientated at a non-zero angle relative to the second longitudinal axis A2. In the illustrated example, the first longitudinal axis A1 (e.g., a portion that extends away from the motor 126) is oriented at an obtuse angle (e.g., 95 degrees, 100 degrees, 105 degrees, 110 degrees, 115 degrees, etc.) relative to the second longitudinal axis A2 (e.g., a portion that extends above the output shaft as viewed in FIG. 2). In other examples, the first longitudinal axis A1 is oriented at an acute angle relative to the second longitudinal axis A2. In yet other examples, the first longitudinal axis A1 is oriented perpendicular to the second longitudinal axis A2, or at another angle. In yet other examples, the first longitudinal axis A1 may be parallel to the second longitudinal axis A2, or may extend along the second longitudinal axis A2.

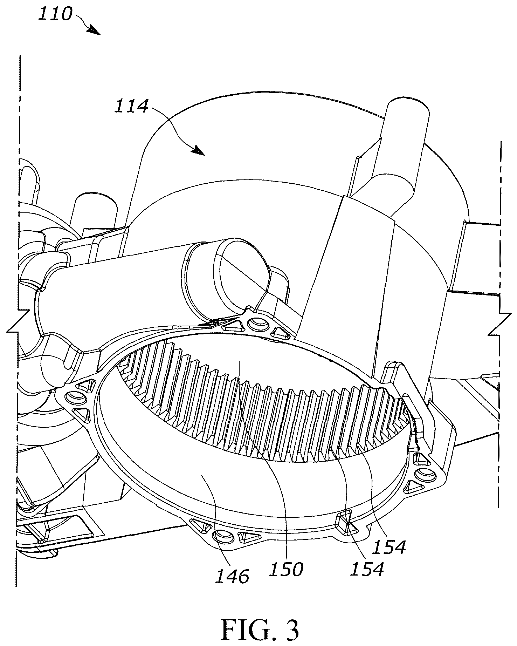

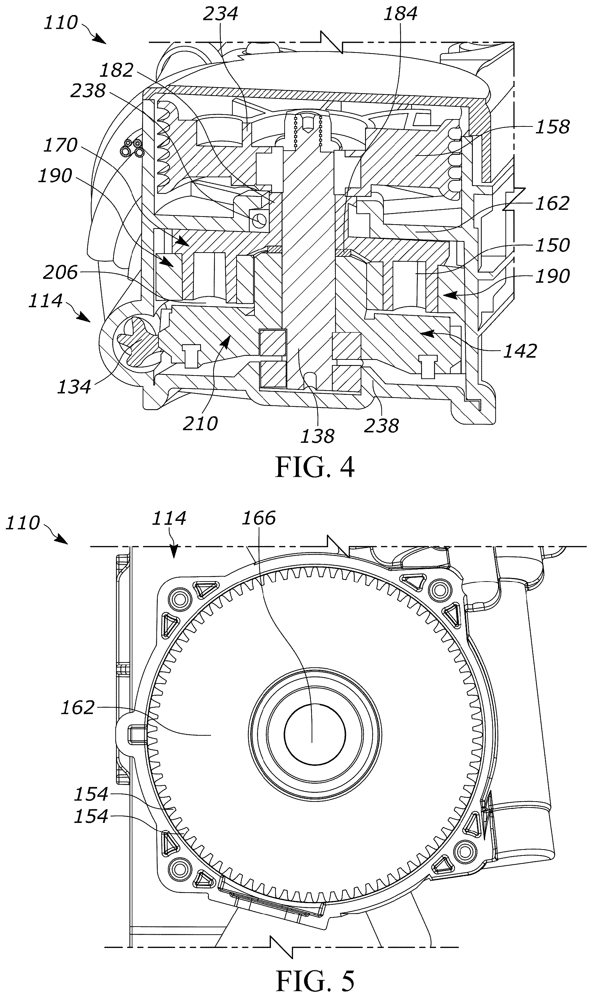

With reference to FIGS. 3-11, in some examples the planetary gear set 142 is coupled to the worm 134 and driven by the worm 134. The main housing 114 itself may form part of the planetary gear set 144. For example, and as illustrated in FIGS. 3 and 4, in some examples the main housing 114 has an interior surface 146 (FIG. 3) that defines an interior cavity 150 (e.g., a lower cavity), and the planetary gear set 142 of the drive unit 110 includes main housing gear teeth 154 located along the interior surface 146.

As illustrated in FIG. 4, the main housing 114 may further include a second interior cavity 158 (e.g., an upper cavity) separated at least partially from the interior cavity 150 by an interior wall 162. The output shaft 138 may extend through a central aperture 166 in the interior wall 162, such that a portion of the output shaft 138 extends upwardly into the second interior cavity 158.

In some examples, the main housing gear teeth 154 are formed integrally as a single monolithic piece (e.g., co-molded) with the main housing 114. For example, the main housing 114 may be molded from plastic, and may utilize the integrated, co-molded gear teeth 154 in the main housing 114 to act as a ring gear that is combined with other gears to form the overall planetary gear set 144 of the planetary gear set 142.

As illustrated in FIG. 3, the main housing gear teeth 154 project radially inwardly into the interior cavity 150 of the main housing 114, so as to define the ring gear of the planetary gear set 144. The main housing gear teeth 154 may extend at least partially (e.g., entirely) around the interior cavity 150. In some examples, the main housing gear teeth 154 generally extend parallel to one another (and parallel for example to the second longitudinal axis A2), and/or are spaced equal distances apart from one another. Other examples include different numbers and/or arrangements of main housing gear teeth than that illustrated.

With reference to FIGS. 4-6, in some examples the planetary gear set 142 includes a carrier 170 that is coupled (e.g., rotationally fixed) to the output shaft 138. In the illustrated example, the carrier 170 is disposed within the main housing 114 (e.g., below the interior wall 162 as viewed in FIG. 4), and defines a carrier central aperture 174 and carrier gear teeth 178 projecting radially inwardly into the carrier central aperture 174.

The output shaft 138 may be driven by the carrier gear teeth 178. For example, the output shaft 138 may include additional output shaft teeth that engage the carrier gear teeth 178, such that when the carrier 170 is rotated, the rotation of the carrier 170 causes a rotation of the output shaft 138. In other examples, the carrier 170 may be coupled (e.g., rotationally fixed) to the output shaft 138 in other manner (e.g., through a keyed connection, and/or through one or more protrusions and/or recesses on the carrier 170 and the output shaft 138 that interlock with one another). In yet other examples, the output shaft 138 is driven via a component other than the carrier 170.

With reference to FIGS. 4 and 5, in some examples the carrier 170 includes a carrier central projecting region 182 that extends through the central aperture 166 in the interior wall 162 of the main housing 114. As seen in FIG. 4, the carrier central projecting region 182 projects upwardly above the interior wall 162. The carrier central projecting region 182 may include the carrier gear teeth 178. In other examples the carrier 170 does not include the carrier central projecting region 182, and/or includes other regions that include the carrier gear teeth 178.

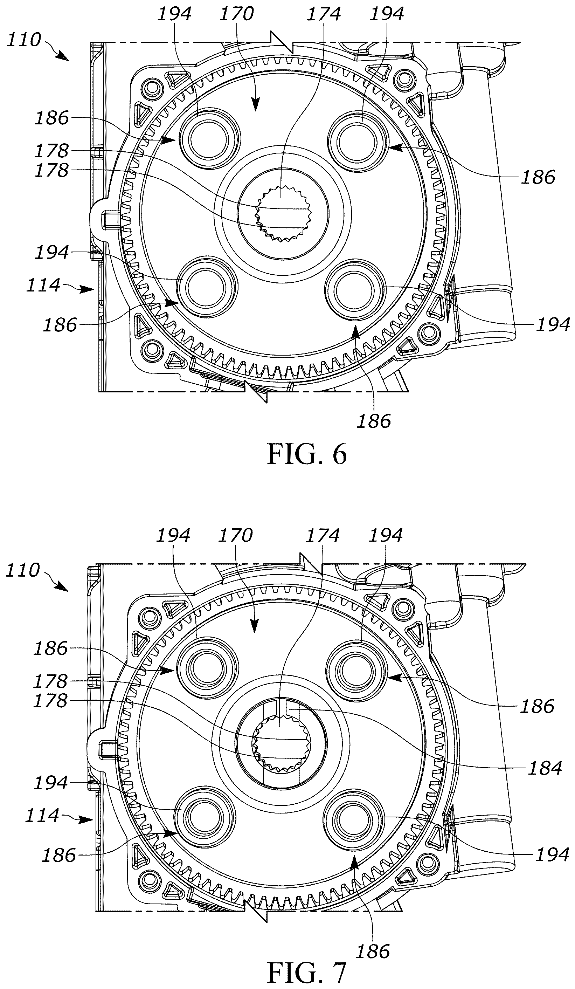

With reference to FIGS. 4 and 7, in the illustrated example the planetary gear set 142 further includes at least one spacer and/or spring coupled to the carrier 170, and positioned within the main housing 114. For example, and as seen in FIG. 7, the planetary gear set 142 may include a first spacer 184. The first spacer 184 may be a washer positioned below (as viewed in FIG. 4) and/or otherwise be aligned with the central projecting region 182. Other examples may not include the first spacer 184.

With reference to FIGS. 6-8, in some examples the carrier 170 includes one or more raised protrusions 186, and the planetary gear set 142 includes one or more planetary gears 190 positioned over the raised protrusions 186, such that the planetary gears 190 rotate about the raised protrusions 186. In the illustrated example the carrier 170 includes four raised protrusions 186, and the planetary gear set 142 includes four planetary gears 190. Other examples may include other numbers and arrangements of raised protrusions 186 and/or planetary gears 190, or may not include any raised protrusions 186.

With reference to FIGS. 6 and 7, in the illustrated example each of the raised protrusions 186 has a generally ring-like shape, and defines a smooth, outer circumferential surface 194. With reference to FIG. 7, each of the planetary gears 190 defines a smooth, inner circumferential surface 198, such that when the planetary gear 190 is positioned over the raised protrusion 186, the inner circumferential surface 198 engages the outer circumferential surface 194, and slides along the outer circumferential surface 194.

Other examples may include various other shapes or arrangements of raised protrusions and/or planetary gears, and/or may include other surfaces that slide relative to one another. For example, the raised protrusions 186 may be solid cylindrical posts, and the planetary gears 190 may sit over the cylindrical posts and rotate about outer surfaces of the cylindrical posts. In some examples, the raised protrusions 186 and/or the planetary gears 190 may have various other shapes and/or sizes.

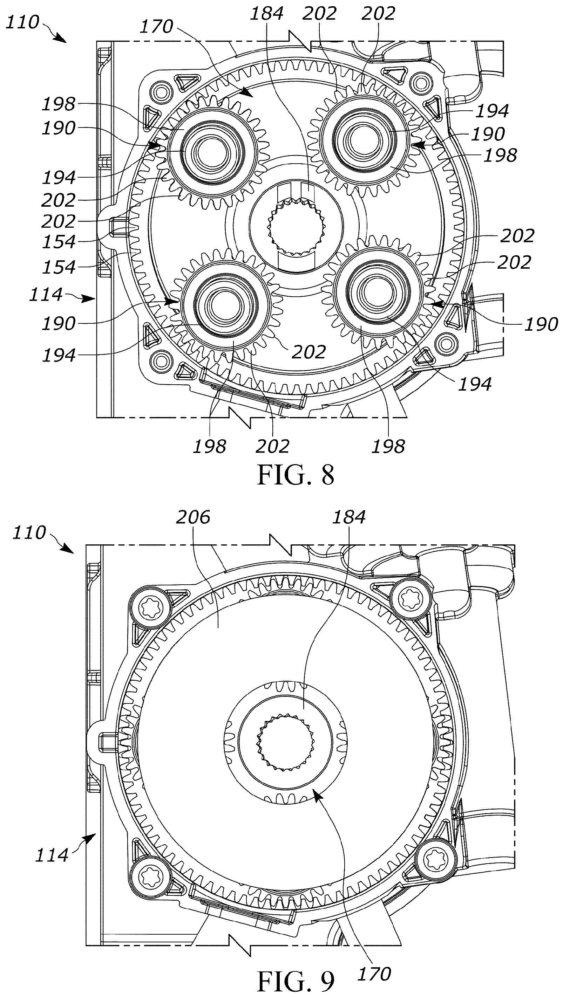

With reference to FIG. 8, each of the planetary gears 190 includes a set of planetary gear teeth 202 that engage the main housing gear teeth 154. For example, and as seen in FIG. 8, the planetary gear teeth may project radially outwardly, so as to engage the radially inwardly-projecting main housing gear teeth 154.

With reference to FIGS. 4 and 9, in some examples the planetary gear set 142 includes another spacer and/or spring positioned entirely below the carrier 170 (e.g., as viewed in FIG. 4), and positioned within the main housing 114. For example, and as seen in FIGS. 4 and 9, the planetary gear set 142 may include a second spacer 206. Other examples may not include the second spacer 206.

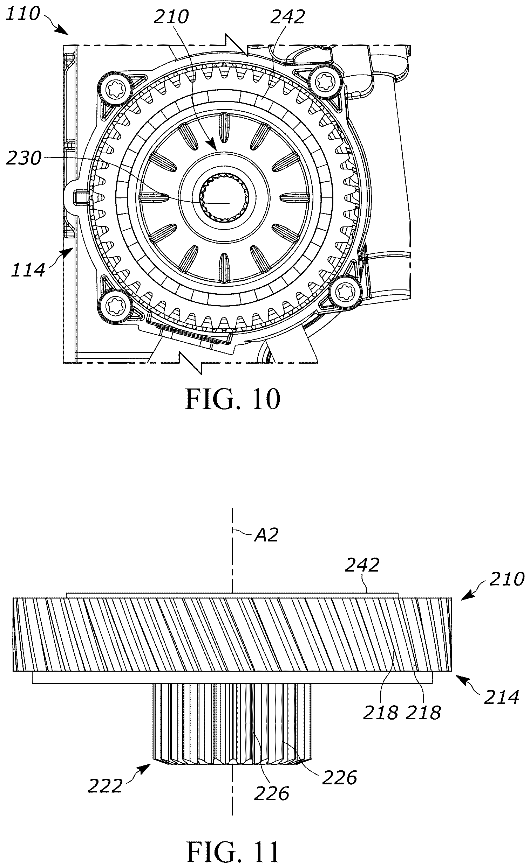

With reference to FIGS. 10 and 11, in some examples the planetary gear set 142 includes a main gear 210 positioned within the main housing 114. The main gear 210 transfers torque or other forces from the worm 134 (or other output of the motor 126) to the planetary gears 190, which then transfer the torque or other forces to the carrier 170 and to the output shaft 138. In the illustrated example, the main gear 210 includes a worm gear 214 that is driven directly by the worm 134. As seen in FIG. 11, the worm gear 214 includes worm gear teeth 218 that project radially outwardly, and at an angle relative the second longitudinal axis A2, such that the worm gear teeth 218 may engage with corresponding teeth on the worm 134.

With continued reference to FIG. 11, in some examples the main gear 210 further includes a sun gear 222 extending from the worm gear 214 (e.g., extending axially from the worm gear 214, and for example integrally formed as a single monolithic piece with the worm gear 214). The sun gear 222 includes sun gear teeth 226 that project radially outwardly. The sun gear teeth 226 are sized and shaped to engage the planetary gear teeth 202 of the planetary gears 190.

Other examples of the main gear 210 may include other numbers and/or arrangements of gears and gear teeth than that illustrated. For example, the main gear 210 may only include the worm gear 214, and the sun gear 222 may be a separate component and/or otherwise coupled to the worm gear 214. In yet other examples, the main gear 210 may only include the sun gear 222, and the worm gear 214 may be a separate component and/or otherwise coupled to the sun gear 222. In some examples, the main gear 210 includes additional gears other than the worm gear 214 and the sun gear 222. Additionally, while the sun gear 222 in the illustrated examples has a smaller diameter than the worm gear 214, in other examples the sun gear 222 may have the same diameter as the worm gear 214, or a larger diameter than the worm gear 214. Other examples includes various other shapes and sizes for the main gear 210 than that illustrated.

With reference to FIG. 10, the main gear 210 may include a main gear central aperture 230. The main gear central aperture 230 may be aligned with the carrier central aperture 174 and the central aperture 166 in the interior wall 162, and with the second longitudinal axis A2. Accordingly, and as seen in FIG. 4, in some examples the output shaft 138 extends through each of the carrier 170, the interior wall 162, and the main gear 210, and is driven to rotate about the second longitudinal axis A2 via the motor 126 and the planetary gear set 142.

As illustrated in FIG. 4, in some examples the output shaft 138 is coupled, for example, to a drum 234 (or other structure), and rotates the drum 234. Additionally, in some examples the output shaft 138 is coupled (e.g., via the drum 234 or other component) to a vehicle door (e.g., power sliding door) to generate motion (e.g., sliding motion) of the vehicle door. With continued reference to FIG. 4, the drive unit 110 may further include one or more bearings 238 that facilitate the rotation of the output shaft 138 and/or the carrier 170 within the main housing 114.

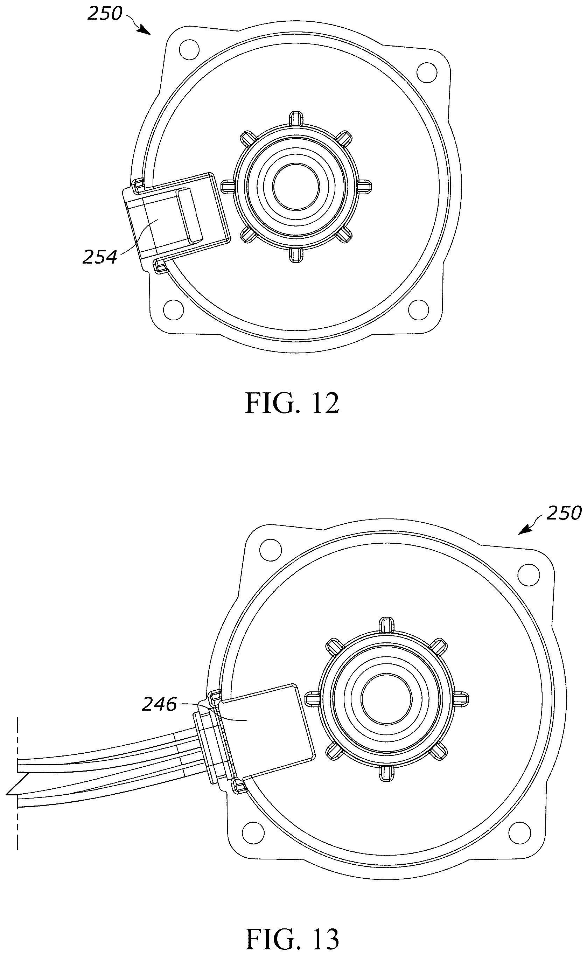

With reference to FIGS. 11-15, in some examples the drive unit 110 additionally includes the use of at least one sensor to sense a rotational position of the main gear 210 and/or the output shaft 138. In the illustrated example, the drive unit 110 includes a magnet 242 (e.g., permanent magnet) coupled to the main gear 210 (e.g., to the worm gear 214 of the main gear 210), and a sensor 246 that detects a magnetic field generated by the magnet 242. As illustrated in FIGS. 12-15, the sensor 246 is coupled to a bottom cover 250, and the bottom cover 250 is coupled to the main housing 114 (e.g., with one or more fasteners). As illustrated in FIG. 12, the bottom cover 250 may include a recessed region 254 that is sized and shaped to receive at least a portion of the sensor 246.

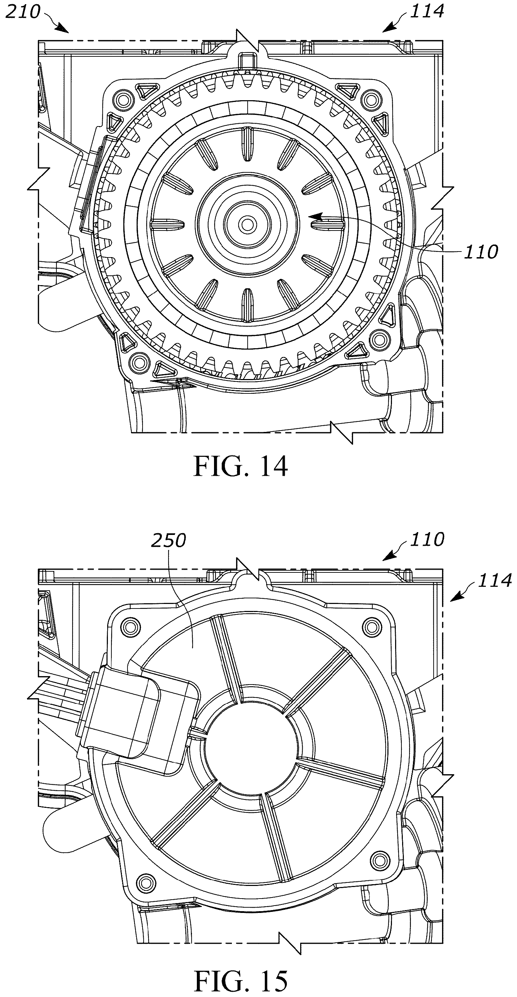

In a fully assembled state (FIG. 15) with the bottom cover 250 coupled to the main housing 114, the sensor 246 is positioned to detect the magnetic field generated by the magnet 242, and to detect rotation of the main gear 210 relative to the main housing 114.

Other examples may include various other numbers and arrangements and types of sensors 246. In some examples, bottom cover 250 is not provided, and/or the sensor 246 is coupled directly to the main housing 114. In some examples, the sensor 246 is coupled to the bottom cover 250 in a different location than that illustrated. Additionally, the magnet 242 may be located at a different location on the main gear 210, or may alternatively be located on the output shaft 138 or the carrier 170. In some examples, multiple magnets 242 and/or sensors 246 are used to detect rotational movement of one or more components of the drive unit 110 (e.g., the main gear 210, the output shaft 138, the carrier 170, and/or other components). In yet other examples, the drive unit 110 does not include the use of sensor 246 and/or magnet 242.

Overall, and as described above, the drive unit 110 may be used in an automotive setting or other setting. In some examples, the drive unit 110 forms part of a lower track of a power swing door system or a center track (rear quarter mount) of a power swing door system. In other examples, the drive unit 110 forms part of another portion of a power swing door system or other system within a motor vehicle.

The drive unit 110 described above may offer an improvement over other existing drive units, which sometimes suffer from a low efficiency geartrain, low durability cycle life, require a costly electromagnetic clutch to move a door manually, and/or have an oversized geartrain that leads to increased drive unit size. For example, it has been found that the drive unit 110 may in some instances provide up to 15 Nm torque output, with a high efficiency gear system, providing ≥ 70% efficiency due to its arrangement of a worm axis (i.e., the first longitudinal axis A1) in relation to a worm gear 214 and the planetary gear set 142. In contrast, it has been found that existing drive units (e.g., which do not include the particular components and arrangement of components as described above) may only provide for example up to 14 Nm torque output with ≥ 50% efficiency.

Additionally, it has been found that the drive unit 110 may in some instances almost triple the durability life of a gear system, as compared to existing drive units. The drive unit 110 may additionally be back driven without a costly electromechanical (EM) clutch. In contrast, existing drive units may not be easy to back drive without an EM Clutch, and may require ≤ 2.5 Nm torque at an output shaft. The drive unit 110 may also in some instances be smaller, have less mass, have fewer components, be lower in cost, and/or be easier to assemble than an existing drive unit.

Some of the examples may be further described by reference to the following numbered clauses:
1. A drive unit comprising:
   a main housing;
   a motor coupled to the main housing;
   a worm coupled to the motor and configured to be rotated via the motor;
   a planetary gear set coupled to the worm and configured to be driven by the worm; and
   an output shaft configured to be driven by the planetary gear set;
   wherein the main housing defines an interior cavity, wherein the drive unit includes main housing gear teeth along an interior surface of the main housing, wherein the main housing gear teeth project radially inwardly into the interior cavity of the main housing and define a ring gear of the planetary gear set.
2. The drive unit of clause 1, wherein the main housing gear teeth are co-molded with the main housing.
3. The drive unit of any of the preceding clauses, further comprising a motor housing, wherein the motor is positioned at least partially within the motor housing, and wherein the motor housing is fixed directly to the main housing.
4. The drive unit of any of the preceding clauses, wherein the worm is positioned entirely in the main housing.
5. The drive unit of any of the preceding clauses, wherein the worm extends along a first longitudinal axis and is configured to rotated about the first longitudinal axis, wherein the output shaft extends along a second longitudinal axis and is configured to rotate about the second longitudinal axis, and wherein the first longitudinal axis is angled at a non-zero angle relative to the second longitudinal axis.
6. The drive unit of clause 5, wherein the first longitudinal axis is angled at an obtuse angle relative to the second longitudinal axis.
7. The drive unit of any of the preceding clauses, wherein the planetary gear set includes a main gear positioned within the main housing, wherein the main gear includes a worm gear configured to be driven directly by the worm.
8. The drive unit of clause 7, wherein the main gear includes a main gear central aperture.
9. The drive unit of clause 7 or clause 8, wherein the main gear includes a sun gear extending from the worm gear, wherein the sun gear includes sun gear teeth.
10. The drive unit of clause 9, wherein the planetary gear set further includes a plurality of planetary gears.
11. The drive unit of clause 10, wherein each of the planetary gears includes a set of planetary gear teeth configured to engage both the sun gear teeth and the main housing gear teeth.
12. The drive unit of clause 11, wherein the planetary gear set includes a carrier, and wherein each of the planetary gears is coupled to the carrier.
13. The drive unit of clause 12, wherein the carrier includes raised protrusions, wherein the planetary gears are positioned over the raised protrusions, such that the planetary gears are configured to rotate about the raised protrusions.
14. The drive unit of clause 12 or clause 13, wherein the carrier defines a carrier central aperture and carrier gear teeth projecting radially inwardly into the carrier central aperture, wherein the output shaft is configured to be driven by the carrier gear teeth.
15. The drive unit of any of clauses 12-14, further comprising a first spacer coupled to the carrier.
16. The drive unit of clause 15, further comprising a second spacer positioned between the carrier and the carrier and the main gear.
17. The drive unit of any of clauses 7-17, further comprising a magnet coupled to the main gear.
18. The drive unit of clause 17, further comprising a bottom cover coupled to the main housing, and a sensor coupled to the bottom cover.
19. The drive unit of clause 18, wherein the sensor is positioned to detect a magnetic field generated by the magnet and to detect rotation of the main gear relative to the main housing.
20. The drive unit of any of the preceding clauses, wherein the output shaft of the drive unit is coupled to a drum.

Although the disclosure has been described in detail referring to certain preferred embodiments, variations and modifications exist within the scope and spirit of one or more independent aspects of the disclosure as described.

## Claims

1. A drive unit comprising:
a main housing;
a motor coupled to the main housing;
a worm coupled to the motor and configured to be rotated via the motor;
a planetary gear set coupled to the worm and configured to be driven by the worm; and
an output shaft configured to be driven by the planetary gear set;
wherein the main housing defines an interior cavity, wherein the drive unit includes main housing gear teeth along an interior surface of the main housing, wherein the main housing gear teeth project radially inwardly into the interior cavity of the main housing and define a ring gear of the planetary gear set.

2. The drive unit of claim 1, wherein the main housing gear teeth are co-molded with the main housing.

3. The drive unit of any of the preceding claims, further comprising a motor housing, wherein the motor is positioned at least partially within the motor housing, and wherein the motor housing is fixed directly to the main housing.

4. The drive unit of any of the preceding claims, wherein the worm is positioned entirely in the main housing.

5. The drive unit of any of the preceding claims, wherein the worm extends along a first longitudinal axis and is configured to rotated about the first longitudinal axis, wherein the output shaft extends along a second longitudinal axis and is configured to rotate about the second longitudinal axis, and wherein the first longitudinal axis is angled at a non-zero angle relative to the second longitudinal axis.

6. The drive unit of claim 5, wherein the first longitudinal axis is angled at an obtuse angle relative to the second longitudinal axis.

7. The drive unit of any of the preceding claims, wherein the planetary gear set includes a main gear positioned within the main housing, wherein the main gear includes a worm gear configured to be driven directly by the worm.

8. The drive unit of claim 7, wherein the main gear includes a main gear central aperture.

9. The drive unit of claim 7 or claim 8, wherein the main gear includes a sun gear extending from the worm gear, wherein the sun gear includes sun gear teeth.

10. The drive unit of claim 9, wherein the planetary gear set further includes a plurality of planetary gears.

11. The drive unit of claim 10, wherein each of the planetary gears includes a set of planetary gear teeth configured to engage both the sun gear teeth and the main housing gear teeth.

12. The drive unit of claim 11, wherein the planetary gear set includes a carrier, and wherein each of the planetary gears is coupled to the carrier.

13. The drive unit of claim 12, wherein the carrier includes raised protrusions, wherein the planetary gears are positioned over the raised protrusions, such that the planetary gears are configured to rotate about the raised protrusions.

14. The drive unit of claim 12 or claims 13, wherein the carrier defines a carrier central aperture and carrier gear teeth projecting radially inwardly into the carrier central aperture, wherein the output shaft is configured to be driven by the carrier gear teeth.

15. The drive unit of any of claim 12-14, further comprising a first spacer coupled to the carrier.
